# EUROPEAN PATENT SPECIFICATION

(11) **EP 0 565 266 B1**
(45) Date of publication and mention of the grant of the patent: **27.01.1999**
(21) Application number: 93302191.7
(22) Date of filing: 23.03.1993
(51) Int. Cl.: A01N 37/04, A01N 59/20

(54) **Method of controlling bacterial/fungal diseases in plants**
Verfahren zur Bekämpfung von Bakterien-/Pilzkrankheiten in Pflanzen
Procédé pour combattre les maladies bactériennes/fongiques des plantes

(30) Priority: 03.04.1992 US 863217
(43) Date of publication of application: 13.10.1993
(73) Proprietor: GRIFFIN CORPORATION, Valdosta, Georgia 31601 (US)
(72) Inventor: Taylor, Evelyn Jean, Hahira, Georgia 3132 (US); Crawford, Mark Allen, Valdosta, Georgia 31602 (US)
(74) Representative: Bannerman, David Gardner

(56) References cited:
- EP-A- 0 039 788
- EP-A- 0 237 946
- EP-A- 0 480 614
- FR-A- 2 255 017
- FR-A- 2 417 943
- FR-A- 2 668 031
- US-A- 4 227 911
- CHEMICAL ABSTRACTS, vol. 113, no. 15 Columbus, Ohio, US; abstract no. 129248t, V.Z.ANNENKOVA ET AL. 'Novel water-soluble polymers having antimicrobial activity'
- DATABASE WPIL Week 8925, Derwent Publications Ltd., London, GB; AN 89-183261
- CHEMICAL ABSTRACTS, vol. 110, no. 16 Columbus, Ohio, US; abstract no. 136558k, 'Polymeric copper chelates as deodorant'
- CHEMICAL ABSTRACTS, vol. 109, no. 22 Columbus, Ohio, US; abstract no. 191005g, M.L.BRENNERMANN ET AL. 'Interaction of copper (2+) and manganese (2+) with poly(acrylic acid) in methanol'

## Description

### Field of Invention

The present invention relates generally to bactericides and fungicides, and, more specifically, to a bactericide/fungicide which is based upon a complex of copper and a partially neutralized polycarboxylic acid.

### Background of the Invention

Bactericides/fungicides are known in the art as agents used to protect agricultural crops from damage caused by pathogenic bacteria/fungi. The use of such products is necessitated by the great losses caused by such organisms. To be economical, the cost of controlling plant diseases by the application of a bactericide/fungicide product must be offset by increased crop yield and quality.

Agricultural bactericides/fungicides are available in different types of formulations including wettable powders, emulsifiable concentrates, water-based flowables, and dry flowables (also known as water dispersible granules). Dry flowable products are generally dustless, free-flowing, granular products. Dry flowable formulations have recently gained in popularity among users because they offer advantages such as improved shelf life, substantially no dusting, easy pouring, a higher percentage of active ingredient, and more convenient packaging than other formulation types.

Copper based bactericides/fungicides are used extensively in agriculture. Several dry flowable copper based bactericides/fungicides are known in the art, these being: "Kocide DF" (RTM) available from Griffin Corporation of Valdosta, Georgia; "Blueshield DF" (RTM) and "Nu-Cop WDG" (RTM) available from Micro Flo Company of Lakeland, Florida; and "Sandoz COC DF" and "Sandoz Cu₂0 DF" (RMT) available from Sandoz Ltd. of Switzerland.

Cupric hydroxide by itself is unstable. However, it is known in the art that cupric hydroxide can be stabilized by a phosphate process. U.S. Pat. No. Re. 24,324 relates to a method of making stable cupric hydroxide. U.S. Pat. No. 3,428,731 relates to dispersions of phosphate stabilized cupric hydroxide. That patent discloses that aqueous dispersions of finely divided phosphate-process cupric hydroxide can be prepared by carefully regulating the pH of the dispersion and the calcium hardness of the aqueous vehicle. The patent also discloses that approximately 1% to 3% by weight of a dispersant should be added to the aqueous vehicle before the phosphate-process cupric hydroxide is added. Suitable dispersing agents are disclosed as including sodium lignosulfonate, the sodium salt of a polymeric carboxylic acid, sulfonated naphthalene, technical protein colloid, tallow dimethyl benzyl ammonium chloride, the sodium salt of polymerized alkyl aryl sulfonic acid, diethanolamide of a special fraction of coconut fatty acids, the sodium salt of condensed mono-naphthalene sulfonic acid and isooctyl phenyl polyethoxy ethanol.

The prior art copper based bactericide/fungicide products require the use of relatively large amounts of copper to effectively control disease. This relatively high level of copper detracts from cost effectiveness, contributes to soil residue problems and raises the potential for phytotoxicity. In addition, the methods used to produce these prior art products are not always cost effective.

Complexes of copper (II) ions with partially neutralized polyacrylic acid and with partially neutralized polymethacrylic acid in aqueous media are known. See for example F. Wall and S. Gill, "Interaction of Cupric Ions with Polyacrylic Acid," J. Phys. Chem., Vol. 58, page 1128 (1954); A. Kotliar and H. Morawetz, "Chelation of Copper (II) with Polyacrylic and Polymethacrylic Acid," J. American Chem. Soc., Vol. 77, page 3692 (1955). Heretofore, complexes of copper with partially neutralized polycarboxylic acids have not been known to possess bactericidal or fungicidal properties. In particular, such complexes were not previously known to be an effective bactericide or fungicide for agricultural use; yet, also be substantially nonphytotoxic. Furthermore, such complexes were not previously known to be effective bactericides or fungicides against copper tolerant bacteria.

EP-0039788 discloses the use of copper amine salts of organic acids as plant protection products. EP-0237946 discloses an antifungal and antibacterial agent containing polycarboxylic acid, ammonia and more than 10% copper. Brenerman et al (VysO Komol. Soedin., Ser.A, 30(8), 1582-6, 1988) disclose solutions comprising Cu²⁺ and Mn²⁺ with poly(acrylic acid in methanol. CA-2051716 discloses a granular phosphate stabilised copper hydroxide dry flowable bactericide/fungicide comprising neutralised polyacrylic acid as a dispersant.

Therefore, a need exists for a copper-based bactericide/fungicide formulation which provides biological activity, particularly against copper tolerant bacteria, with substantially no phytotoxicity.

### Summary of the Invention

The invention relates to a method of controlling bacterial-fungal diseases in plants comprising the step of applying to a plant substrate to be treated a bactericide/fungicide comprising an aqueous solution of a complex of copper and a partially neutralised, water-soluble polycarboxylic acid having a molecular weight of between approximately 1,000 and 300,000, characterised in that:
- the partially neutralised polycarboxylic acid has a pH in aqueous solution of between 3 and 9 when the polycarboxylic acid is in solution before complexation with said copper;
- said composition is substantially free of ammonia; and
- said composition is substantially nonphytotoxic.

A further object of the present invention is to provide a method of controlling bacterial/fungal diseases in plants comprising the step of applying to a plant substrate to be treated a bactericide/fungicide which can be made from a variety of different copper sources.

Yet another object of the present invention is to provide a method of controlling bacterial/fungal diseases in plants comprising the step of applying to a plant substrate to be treated a bactericide/fungicide which can be used to control copper tolerant bacteria.

Another object of the present invention is to provide a method of controlling bacterial/fungal diseases in plants comprising the step of applying to a plant substrate to be treated a bactericide/fungicide which can be used on plants and crops which are injured by conventional copper-based bactericides/fungicides when used at optimum rates for disease control.

Still another object of the present invention is to provide a method of controlling bacterial/fungal diseases in plants comprising the step of applying to a plant substrate to be treated a bactericide/fungicide which is substantially water-soluble so that it can be relatively easily removed from crops or plants to which it is applied so that it can be applied to crops later in the growing cycle and/or post-harvest.

Another object of the present invention is to provide a method of controlling bacterial/fungal diseases in plants comprising the step of applying to a plant substrate to be treated a bactericide/fungicide which does not leave a colored residue on the crops or plants to which it is applied.

A further object of the present invention is to provide a method of controlling bacterial/fungal diseases in plants comprising the step of applying to a plant substrate to be treated a bactericide/fungicide which is useful in foliar applications for disease control.

Still another object of the present invention is to provide a method of controlling bacterial/fungal diseases in plants comprising the step of applying to a plant substrate to be treated a bactericide/fungicide which requires a lower copper use rate for the same level of protection which would be provided by copper hydroxide-based bactericides/fungicides.

A further object of the present invention is to provide a method of controlling bacterial/fungal diseases in plants comprising the step of applying to a plant substrate to be treated a bactericide/fungicide which can be used to pretreat seed prior to planting.

These and other objects, features and advantages of the present invention will become apparent after a review of the following detailed description of the disclosed embodiments and the appended drawing and claims.

### Brief Description of the Drawings

Fig. 1 is a graph of the concentration of copper plotted against the pH of neutralized polyacrylic acid at a concentration of 1% by weight (solids) for the three different sources of copper.
Fig. 2 is a graph of the concentration of copper plotted against the pH of neutralized polycarboxylic acids at a concentration of 1% by weight (solids) for the three different polycarboxylic acids.
Fig. 3 is a graph of the concentration of copper plotted against the concentration of neutralized polycarboxylic acid (solids) for three different polycarboxylic acids.
Fig. 4 is a graph of the concentration of copper plotted against the pH of neutralized polycarboxylic acid solutions for three different polycarboxylic acids.
Fig. 5 is a graph of the concentration of copper plotted against the pH of neutralized polyacrylic acid for three different neutralizing agents.
Fig. 6 is a graph of the colony diameter (mm) of *Alternaria solani* plotted against the copper concentration (ppm) for three different copper sources.

### Detailed Description of the Disclosed Embodiments

The present invention relates to a method of controlling bacterial/fungal diseases in plants comprising the step of applying to a plant substrate to be treated a copper-based bactericide/fungicide. The product used in the method of the present invention offers improved biological activity over typical copper-based products, while requiring significantly less copper in its formulation. The decreased copper content reduces the bactericide/fungicide formulation's contribution to soil accumulation of copper. The bactericide/fungicide used in the method of the invention is also substantially nonphytotoxic to the plants to which it is applied; particularly, in comparison to other water-soluble copper-based formulations.

A bactericide/fungicide formulation to be used in the method of the present invention may be produced by the following steps. An aqueous solution of a polycarboxylic acid is prepared by combining with water a water-soluble polycarboxylic acid. As used herein the term polycarboxylic acid shall mean both homopolymers and copolymers of carboxylic acids. The aqueous solution of the polycarboxylic acid is then partially neutralized with a basic material. To the aqueous solution of the water-soluble, partially neutralized polycarboxylic is added a copper-containing compound which when added to the aqueous solution releases copper (II) ions (or cupric ions) which will react with the partially neutralized polycarboxylic acid to form a complex therewith. The resulting copper complex will be substantially completely water-soluble.

As disclosed herein, the weights of the copper and the polycarboxylic acid components are stated as percent by weight in aqueous solution (unless specifically stated otherwise). The bactericide/fungicide used in the method of the present invention can also be prepared as a dry composition by drying the composition after complexing in the aqueous solution. Obviously, when the water is removed from the aqueous solution of the copper complex, the percentages by weight of the copper and polycarboxylic acid will change. However, these changes can be easily calculated by those skilled in the art based upon the percentages by weight of the components in the aqueous solution.

Polycarboxylic acids which are useful in the preparation of the bactericide/fungicide used in the method of the present invention are water-soluble polycarboxylic acids having molecular weights of between 1,000 and 300,000; preferably between 2,000 and 50,000. The precise structure of the polycarboxylic acid is not critical to the present invention. Examples of polycarboxylic acids which are useful in the present invention include polyacrylic acid, polymethacrylic acid, copolymers of acrylic acid and acrylamide, copolymers of acrylic acid and methacrylamide, copolymers of acrylic acid and acrylate esters, copolymers of acrylic acid and methacrylic acid, copolymers of acrylic acid and methacrylate esters, copolymers of acrylic acid and maleic anhydride, carboxymethylcellulose, copolymers of maleic acid and butadiene, polymers of maleic acid and maleic anhydride, copolymers of maleic acid and acrylic acid, and copolymers of methyl vinyl ether and maleic anhydride.

Polycarboxylic acids which by themselves are not water-soluble can be made useful in the present invention by converting the water-insoluble polycarboxylic acid to a water-soluble salt of the polycarboxylic acid. The techniques by which such salts are prepared are well known in the art. Generally speaking, however, such salts are prepared by reacting the polycarboxylic acid with basic materials, such as, sodium hydroxide; potassium hydroxide; NaHCO₃; Na₂CO₃; NH₄OH, R₄N⁺ OH⁻ wherein R is either CH₃ or C₂H₅; primary amines, such as methyl, ethyl, n-propyl, isopropyl, t-butyl; secondary amines, such as dimethyl, diethyl, di-n-propyl and di-isopropyl; and tertiary amines, such as trimethyl, triethyl, and tri-n-propyl.

There is no particular upper limit for the concentration of the polycarboxylic acid in the aqueous solution. The polycarboxylic acid can be added to the water to form a solution thereof in amounts sufficient to react with the copper-containing compound and to form a complex therewith. However, as the concentration of the polycarboxylic acid increases, the viscosity of the solution also increases. This is particularly true of relatively high molecular weight polycarboxylic acids. Generally, it is not desirable for the viscosity of the aqueous solution to be too great to effectively mix with the copper-containing compound. Practically speaking, concentrations of the polycarboxylic acid useful in the present invention are between 0.2% by weight and 80% by weight; preferably between 0.75% by weight and 20% by weight.

When the polycarboxylic acid is combined with water to form a solution thereof, the solution will generally have an acidic pH. It is a critical aspect of the present invention that the polycarboxylic acid be partially neutralized with a basic material so that the pH of the solution is between 3 and 9; preferably between approximately 3.5 and 5. Generally, it has been observed that the amount of copper which can be complexed with the partially neutralized polycarboxylic acid is dependent, at least in part, upon the pH of the aqueous solution of the partially neutralized polycarboxylic acid. The concentration of the copper in the complex reaches a maximum between the pHs listed above. Outside the range of pH of 3 to 9, the amount of copper which will complex with the partially neutralized polycarboxylic acid is not practically useful.

The nature of the basic material which is used to neutralize the polycarboxylic acid is not critical to the bactericide/fungicide used in the method of the present invention. Suitable neutralizing agents include sodium hydroxide; potassium hydroxide; NaHCO₃; Na₂CO₃; NH₄OH, R₄N⁺ OH⁻ wherein R is either CH₃ or C₂H₅; primary amines, such as methyl, ethyl, n-propyl, isopropyl, t-butyl; secondary amines, such as dimethyl, diethyl, di-n-propyl and di-isopropyl; and tertiary amines, such as trimethyl, triethyl, and tri-n-propyl.

The resulting partially neutralized polycarboxylic acid is a combination of a copolymer of polycarboxylic acid and a polycarboxylic salt thereof, such as sodium polyacrylate. Suitable partially neutralized polycarboxylic acids are commercially available. Such commercially available products include "Goodrite K-752" (RTM) available from B.F. Goodrich Co. of Cleveland, Ohio. "Goodrite K-752" (RTM) is a polyacrylic acid, partial sodium salt in water having the formula (C₃H₄0₂)ₓ(C₃H₃Na0₂)_{y}; and DP6-2696 and DISPEX N40 (RTM) both salts of polymeric carboxylic acid in aqueous solution available from Allied Colloids, Inc. of Suffolk, Virginia.

The copper-containing compounds which are useful in the method of the present invention are those compounds which when combined with the aqueous solution of the partially neutralized polycarboxylic acid will provide copper (II) ions which will complex with the partially neutralized polycarboxylic acid. Copper-containing compounds which are useful in the present invention include Cu(OH)₂, CuSO₄, Cu(ClO₄)₂, Cu₂O, Cu(NO₃)₂, CuCl₂, copper oxychloride, basic copper carbonate and tribasic copper sulfate. Copper oxychloride has the chemical formula 3Cu(OH)₂·CuCl₂. Basic copper carbonate has the formula Cu(OH)₂·CuCO₃. Tribasic copper sulfate has the formula 3Cu(OH)₂·CuSO₄.

The copper-containing compound can be either water-soluble, such as, CuSO₄, Cu(ClO₄)₂, Cu(NO₃)₂ and CuCl₂, or substantially water-insoluble, such as, Cu(OH)₂, Cu₂O, tribasic copper sulfate, basic copper carbonate and copper oxychloride. The water-insoluble copper-containing compounds heretofore were not known to form complexes.

Copper hydroxide compounds which are useful in the present invention include both cupric hydroxide technical (phosphate stabilized using the process disclosed in U.S. Patent Nos. Re. 24,324 and 3,428,731 and copper hydrate, a purer form of copper hydroxide. Other stabilized forms of copper hydroxide can also be used.

Copper-containing compounds useful in the present invention are commercially available. Such commercially available products include KOCIDE® cupric hydroxide, a phosphate stabilized cupric hydroxide formulation grade agricultural fungicide containing 88% copper hydroxide and 12% inerts available from Griffin Corporation of Valdosta, Georgia. Methods of producing phosphate stabilized cupric hydroxide are also disclosed in U.S. Pat. Nos. 3,428,731 and Re. 24,324.

The amount of the copper-containing compound which is added to the aqueous solution of the partially neutralized polycarboxylic acid is that amount which will be useful in the final product as a bactericide/fungicide. Generally speaking, in making the bactericide/fungicide used in the method of the present invention, it is desirable to complex as much copper with the partially neutralized polycarboxylic acid as is possible. Factors which affect the amount of copper which can be complexed with the partially neutralized polycarboxylic acid are the pH of the aqueous solution of the partially neutralized polycarboxylic acid, molecular weight of the polycarboxylic acid, and the concentration of the partially neutralized polycarboxylic acid.

Generally, it has been observed that when there is an excess of the water-insoluble copper-containing compound which will react to complex with the polycarboxylic acid, the excess copper-containing compound will not dissolve in the aqueous solution. This may or may not be an undesirable situation. If solid water-insoluble copper-containing compound is not desired in the composition used in the method of the present invention, it can be separated from the liquid portion by conventional means, such as by filtration. An excess of water-soluble copper-containing compound will result in the presence of non-complexed copper ions in solution. Such non-complexed copper ions in solution may cause the solution to be phytotoxic. Therefore, when the source of copper to complex with the partially neutralized polycarboxylic acid is from a water-soluble copper-containing compound, the amount of such copper-containing compound which is used should be an amount sufficient to react with the polycarboxylic acid, but not an amount which will produce excessive non-complexed copper ions which will thereby render the solution phytotoxic.

Amounts of the copper from the copper-containing compound which are useful in the method of the present invention are between 0.1% by weight and 5% by weight (copper metal equivalent); preferably, between 0.1% by weight and 3.2% by weight (copper metal equivalent).

The aqueous copper complex solution can be used to treat plants in its liquid form as produced by the above-described process or it can be optionally dried to provide solid, substantially dry-products which can be redispersed in water to form aqueous solutions for spray application. The aqueous copper complex solution can be dried in conventional drying equipment, such as an oven drier or a spray drier, or by freeze drying techniques. For drying by spray drying, a spray dryer equipped with either a single fluid nozzle, a hydraulic nozzle or a rotating disk atomizer can be used. Such a spray drier would typically have an inlet temperature between 176°C and 249°C (350°F-480°F) and an outlet temperature between 65°C and 126°C (150°F-260°F) Spray drying equipment and techniques for spray drying dispersions and solutions are well known in the art. Similarly, freeze drying equipment and techniques for freeze drying dispersions and solutions are well known in the art. Using techniques well known in the art, the bactericide/fungicide used in the method of the present invention can be prepared in various forms, such as flakes, powders, granules, tablets and solutions.

The bactericide/fungicide used in the method of the present invention may be applied directly to the leaves of a plant to control bacterial/fungal diseases. The bactericide/fungicide is applied in its liquid form as produced by the above-described process or by mixing the dried form with water to again form an aqueous solution and spraying the resulting solution onto the plants to be treated using conventional agricultural sprayers and spraying techniques well known in the art. The bactericide/fungicide used in the method of the present invention in liquid form is preferably diluted with water and applied to the leaves of plants by spraying (either aerial or ground) or by chemigation at a rate of between approximately 1.12 x 10⁻⁵ and 6.73 x 10⁻⁴ kg/m² (0.1 - 6 pounds per acre) metallic copper equivalent in a volume of water of between approximately 9.35 and 7482 l/ha (1 - 800 gallons per acre).

The method of the present invention is useful for treating bacterial and fungal diseases on various plants including citrus, such as grapefruit, lemon, lime, orange, tangelo and tangerine; field crops, such as alfalfa, oats, peanuts, potatoes, sugar beets, wheat, and barley; small fruits, such as blackberry, cranberry, currant, gooseberry, raspberry and strawberry; tree crops, such as almond, apple, apricot, avocado, banana, cacao, cherry, coffee, filberts, mango, nectarine, olive, peach, pear, pecan, plum, prune and walnut; vegetables, such as beans, broccoli, brussel sprout, cabbage, cantaloupe, carrot, cauliflower, celery, collards, cucumber, eggplant, honeydew, muskmelon, onions, peas, peppers, pumpkin, squash, tomato and watermelon; vines, such as grape, hops and kiwi; miscellaneous, such as ginseng, live oak and sycamore and ornamentals, such as aralia, azalea, begonia, bulbs (Easter lily, tulip, gladiolus), carnation, chrysanthemum, cotoneaster, euonymus, India hawthom, ivy, pachysandra, periwinkle, philodendron, pyracantha, rose and yucca (Adams-Needle).

The method of the present invention is useful for treating plants with bacterial or fungal diseases, such as melanose, scab, pink pitting, greasy spot, brown rot, phytophthora, citrus canker, xanthomonas and cerospora leaf spots, black leaf spot (alternaria), alternaria blight, botrytis blight, powdery mildew, xanthomonas leaf spot, anthracnose, pseudomonas leaf spot, septoria leaf spot, entomosporium leaf spot, volutella leaf blight, phomopsis stem blight, bacterial leaf spot, fire blight, black spot, leaf curl, coryneum blight (shot hole), blossom blight, pseudomonas blight, shuck and kernal rot (*Phytophthora cactorum*), zonate leafspot (*Cristulariella pyramidalis*), walnut blight, bacterial blight (halo and common), brown spot, black rot (xanthomonas), downy mildew, cercospora early blight, septoria late blight, angular leaf spot, phomopsis, purple blotch, bacterial speck, gray leaf mold, septoria leaf spot, dead bud (*Pseudomonas syringae*), *Erwinia herbicola, Pseudomonas fluorescens,* stem blight, ball moss, leptosphaerulina leaf spots, helminthosporium spot blotch, leaf spot, cane spot, fruit rot, blossom brown rot, bacterial blast (pseudomonas), European canker, crown or collar rot, sigatoka, black pitting, black pod, coffee berry disease (*Collectotrichum coffeanum*), leaf rust (*Hemileia* vastatrix), iron spot (*Cercospora coffeicola*), pink disease (*Corticium salmonicolor*) eastern filbert blight, and peacock spot.

Certain bacteria strains have become resistant to treatment by conventional copper-based bactericides. However, the method of the present invention is particularly well suited for controlling copper tolerant bacteria, such as, *Xanthomonas campestri*s and *Pseudomonas syringae.*

Since the bactericide/fungicide used in the method of the present invention is water-soluble it can be applied to various plants or crops and then relatively easily removed by washing or spraying with water. Consequently, the bactericide/fungicide may be applied to crops later in their growth cycle than would otherwise be possible with conventional bactericides/fungicides. Furthermore, the method of the present invention can also be used to treat post-harvest crops, such as oranges, citrus, cucumbers and apples, to provide a protective barrier which can be easily removed by washing.

The bactericide/fungicide when applied to plants and then permitted to dry thereon does not leave a colored residue on the plants as do conventional copper-based bactericides/fungicides. Therefore, the method of the present invention can be used to treat nursery crops and greenhouse ornamentals.

The reduced phytotoxicity of the bactericide/fungicide used in the method of the present invention allows the method to be used to treat copper sensitive plants and crops, such as peaches, pears, apples, and lettuce, which would otherwise be injured by conventional copper-based bactericides/fungicides when used at optimum rates for disease control.

The method of the present invention can also be used to pretreat seed prior to planting. The bactericide/fungicide can be applied to seed using conventional seed treatment equipment known in the art by spraying the bactericide/fungicide onto the seed and allowing the bactericide/fungicide to dry thereon, thereby providing a coating on the seed. Furthermore, the treated seed can be handled and planted in the conventional manner for seed which has been treated with known copper-based bactericides/fungicides. The method of the present invention is particularly useful in controlling seed-borne inoculum and preventing the infection of germinating seedlings. Although the method of the present invention is useful in treating seed generally, it is particularly useful in treating seed for crops, such as rice, wheat, cotton, soybeans, beans, corn, and peanuts.

Enhanced retention of the bactericide/fungicide used in the method of the present invention on plant surfaces after exposure to rain may be achieved by adding certain functional agents to the concentrated composition or to the spray solution. Such compounds which are useful include, but are not limited to polyvinylpyrrolidone (PVP), polyoxyethylene, polyvinyl alcohol, and polyacrylamide. These compounds are known in the art as sticker compounds. The sticker compounds are added in an amount which provides the desired degree of rainfastness without unduly affecting the bactericidal/fungicidal properties of the copper complex solution. Generally, amounts of the sticker compound which are added to the copper complex solution and which are useful in the present invention are between 0.1% and 10% by weight.

It has been observed that the amount of copper which can be complexed with the partially neutralized polycarboxylic acid is related to the molecular weight of the polycarboxylic acid. Generally, the higher the molecular weight of the polycarboxylic acid, the more copper which can be complex therewith. As stated above, however, as the molecular weight of the polycarboxylic acid increases, so does the viscosity. Therefore, in selecting a polycarboxylic acid for use in the present invention, the competing factors of copper content and viscosity must be balance against each other.

The following examples are illustrative of the present invention and are not intended to limit the scope of the invention as set forth in the appended claims.

### Example 1

An aqueous solution is prepared by combining 959 grams of water and 40 grams of Goodrite K-752 (RTM) (a 63% solution in water of a polyacrylic acid, molecular weight 2,100) which is neutralized to pH 7 with 50% NaOH. The solution is mixed at ambient temperature to assure complete solution of the partially neutralized Goodrite K-752 in the water. To this solution is added 1.42 grams of Cu(OH)₂ (56.4% metallic copper). The mixture is stirred for between 12 to 24 hours to assure complete dissolution of the Cu(OH)₂. The resulting clear blue solution is analyzed for copper. The analysis reveals that the aqueous solution contains 800 ppm copper.

### Example 2

An aqueous solution of Goodrite K-752 at pH 4.5 is prepared by dissolving 113.4 grams of Goodrite K-752 in 433.8 grams of water and neutralizing with 21.4 grams of 50% NaOH. The partially neutralized Goodrite K-752 is added to 789 grams of water and stirred until the solution is homogeneous. To this solution is added 32.3 grams of copper hydrate (62% metallic copper). The mixture is stirred for between 12 to 24 hours to assure complete dissolution of the copper hydrate. The resulting clear blue solution contains 2% by weight copper metal equivalent.

### Example 3

An aqueous solution is prepared by combining 940 grams of deionized water and 60 grams of Goodrite K-752 (63% solution in water of a polyacrylic acid, molecular weight 2,100) which is neutralized with 50% sodium hydroxide to a pH of approximately 7. The solution is mixed at ambient temperature to assure complete solution of the Goodrite K-752 in the water. To the partially neutralized aqueous solution of Goodrite K-752 is added 10 grams of Cu(OH)₂. The aqueous dispersion is then mixed for a period of 24 to 48 hours to allow sufficient time for complete reaction of the copper hydroxide with the partially neutralized polyacrylic acid. Since the copper hydroxide is substantially water-insoluble, the excess undissolved copper hydroxide remains in solid form in the dispersion. The dispersion is then filtered to separate the liquid phase from the solid copper hydroxide using a 0.20 µm filter. The filtrate is then analyzed for copper. The analysis reveals that the aqueous solution contains 1270 ppm Cu (metal equivalent).

### Example 4

An aqueous solution is prepared by combining 989 grams of water and 10 grams of Goodrite K-752 (a 63% solution in water of a polyacrylic acid, molecular weight 2,100) which is neutralized with 50% sodium hydroxide to a pH of approximately 7. The solution is mixed at ambient temperature to assure complete solution of the Goodrite K-752 in the water. To the partially neutralized aqueous solution of Goodrite K-752 is added 1.0 grams of CuSO₄. The mixture is stirred for period of 30 minutes to assure complete solution of the copper sulfate. The solution is then analyzed for copper. The analysis reveals that the aqueous solution contains 800 ppm Cu (metal equivalent). The solution is tested for biological activity and demonstrates essentially no phytotoxicity similar to conventional aqueous dispersions of cupric hydroxide at an equal level of copper content. Equal levels of free ionic copper from copper sulfate result in severe plant injury and necrosis.

### Example 5

An aqueous solution is prepared by combining 1000 grams of water and 20 grams of Goodrite K-752 (a polyacrylic acid having a molecular weight of approximately 2,100). The solution is mixed at ambient temperature to assure complete solution of the Goodrite K-752 in the water. To this solution is added enough sodium hydroxide to partially neutralize the Goodrite K-752 to a pH of approximately 7. To the partially neutralized aqueous solution of Goodrite K-752 is added 2 grams of CuCl₂. The mixture is stirred for period of 30 minutes to assure complete solution of the cupric chloride. The solution is then analyzed for copper. The analysis reveals that the aqueous solution contains 1000 ppm Cu (metal equivalent).

### Example 6

An aqueous solution is prepared by combining 960 grams of water and 40 grams of Goodrite K-752 (a 63% solution in water of a polyacrylic acid, molecular weight 2,100) which is neutralized with 50% sodium hydroxide to a pH of approximately 7. The solution is mixed at ambient temperature to assure complete solution of the Goodrite K-752 in the water. To the partially neutralized aqueous solution of Goodrite K-752 is added 10 grams of copper oxychloride. The aqueous dispersion is mixed for a period of 24 to 48 hours to allow time for the copper to be complexed with the polymer. Since the copper oxychloride is substantially water-insoluble, the excess copper oxychloride substantially remains in solid form in the dispersion. The dispersion is then filtered to separate the liquid phase from the solid copper hydroxide using a 0.20 µm filter. The filtrate is then analyzed for copper. The analysis reveals that the aqueous solution contains 325 ppm Cu (metal equivalent).

### Example 7

A series of six samples containing 800 ppm copper (4X the estimated LD₉₀ rate of 200 ppm for the control of *Colletotrichum lagenarium* on cucumber plants) from copper sulfate are prepared. The copper is complexed in aqueous solutions of polycarboxylic acid (Goodrite K-752) partially neutralized to a pH of 7 with sodium hydroxide. The different samples contain the following concentrations of polymer: 4%, 2%, 1%, 0.75%, 0.5% and 0.25%. Samples containing 4%, 2% and 1% polymer give clear blue solutions, although the color becomes more green as the polymer content decreases. Below a polymer content of 0.75%, a blue-green precipitate forms, leaving a colorless upper layer. It is believed that an excess of copper causes the polymer to become insoluble, possibly through cross-linking. The samples containing from 4% to 0.75% polymer show substantially no phytotoxicity on greenhouse cucumbers with the samples containing 1% and 0.75% polymer showing the least amount of phytotoxicity. Those samples also show efficacy as bactericides/fungicides with respect to *Colletotrichum lagenarium* on cucumber plants. Cucumber plants treated with the same rate of free ionic copper from copper sulfate are severely injured and necrotic. Plants treated with copper sulfate can not be evaluated for efficacy due to severe injury.

### Example 8

Copper complexes of polycarboxylic acids are prepared in accordance with Examples 1 and 4 above using separately CuSO₄ and Cu(OH)₂ as the sources of copper. Samples of each copper source are prepared at concentrations of 800 ppm, 400 ppm, 200 ppm and 100 ppm copper (metal equivalent). A cumulative phytotoxicity test is conducted on tomato plants and pepper plants. Each sample is applied to the plants four times at weekly intervals. No phytotoxicity of any kind is observed.

### Example 9

Copper complexes of polycarboxylic acids are prepared in accordance with Example 1 except the molecular weight of the polyacrylic acid as well as the pH of the partially neutralized polyacrylic acid are varied for different samples. Several samples of polyacrylic acid having different molecular weights are obtained from B.F. Goodrich. These samples are: Goodrite K-752 (molecular weight 2,100); Goodrite K-732 (molecular weight 5,100 ); Goodrite K-XP82 (RTM) molecular weight 2,800); and Goodrite K-XP83 (RMT) molecular weight 5,800). Aqueous solutions of the polymer are prepared; each solution containing 1.6% of polymer solids. The samples are neutralized with sodium hydroxide to the pHs shown below. Copper complexes are prepared from each of the neutralized samples using excess amounts of Cu(OH)₂. The samples are filtered through a 0.22 m syringe filter and analyzed for copper. The results are shown in the Table 1 below:

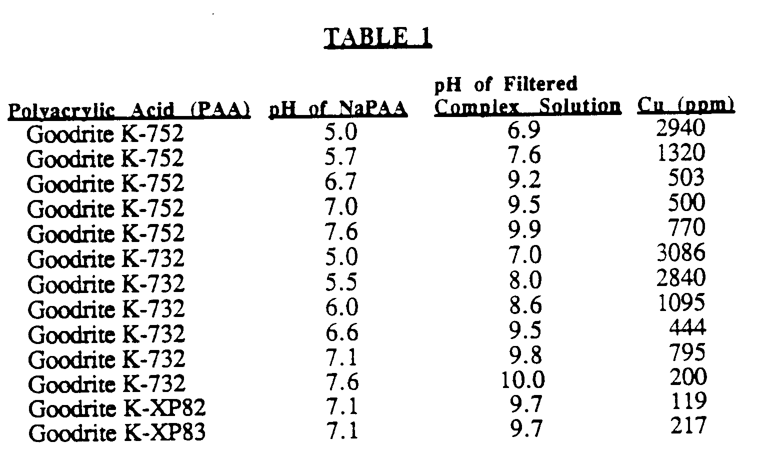

As can be seen from the Table 1, although there is considerable variation in the results, pH clearly has a much more significant effect on the amount of copper that can be complexed than does molecular weight in this range from 2,100 to 5,800.

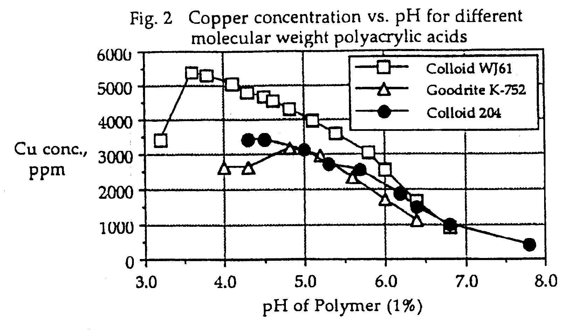

Additional samples were prepared as described above using three different polymers and copper hydrate as the source of copper. The three polymers which were used were Goodrite K-752 (polyacrylic acid, molecular weight 2,100); Colloid WJ61 (RTM) (polyacrylic acid, molecular weight 60,000) available from Rhone-Poulenc and Colloid 204 (RTM) (polyacrylic acid, molecular weight 10,000) also available from Rhone-Poulenc. The results of this comparison are shown in Fig. 2 where the concentration of copper (metal equivalent) is plotted against the pH of the neutralized polymer at a concentration of 1% by weight of polyacrylic acid solids for the three different polymers. Again, as can be seen from Fig. 2, the dominating factor in the amount of copper complexed is the pH of the neutralized polymer, but the highest molecular weight polymer (Colloid WJ61) does complex significantly more copper than the other polymers in the pH range of 3.5 to 6.

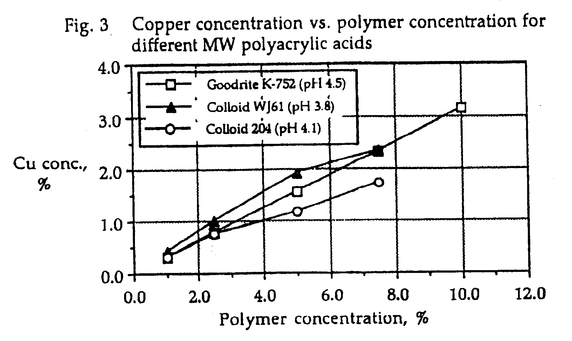

Using the same copper complex solutions described above, the amount of complexed copper is measured for solutions in which the pH of the partially neutralized polycarboxylic acid is optimal for complexing copper and the amount of polymer is varied between 1% and 10% by weight of polyacrylic acid solids. The results of this test are shown in Fig. 3 wherein the amount of copper is graphed against the concentrations of the polymer for each of the three different polymers.

### Example 10

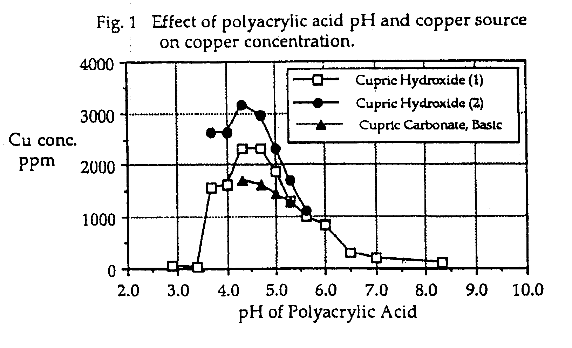

Copper complexes of polycarboxylic acid are prepared in accordance with Example 3 except the pH of the partially neutralized polyacrylic acid is varied for different samples. The complexes are formed by preparing aqueous solutions containing 1% by weight polymer solids of a polyacrylic acid (Goodrite K-752) which are partially neutralized using sodium hydroxide to pHs ranging from approximately 3 to approximately 8.5. excess amounts of copper from three different copper sources are then added to the partially neutralized polymer solutions. One source is cupric hydroxide technical (phosphate stabilized using the process disclosed in U.S. Patent Nos. Re. 24,324 and 3,428,731); another source is copper hydrate (a purer form of cupric hydroxide). The third source is basic cupric carbonate. The liquid portions of the samples are separated from the solid copper-containing compounds and the liquid portions are analyzed for copper. The results of the test are shown in Fig. 1 wherein the concentration of copper (metal equivalent in ppm) is plotted against pH of the neutralized polymer solutions for each of the various samples.

It can be seen from the graph that when cupric hydroxide technical is used as the source of copper, the maximum amount of copper which can be complexed occurs at a pH of approximately 4.5. However, when copper hydrate is used as the source of copper, the maximum copper complexation occurs at approximately the same pH, but approximately 35% more copper can be complexed using the same amount of polyacrylic acid. The impurities in the cupric hydroxide technical, most likely the residual salts, apparently affect the ability of the polymer to complex copper.

### Example 11

Copper complexes of polyacrylic acid are prepared from various sources of copper by adding the copper-containing compounds to aqueous solutions of 4% Goodrite K-752 partially neutralized to a pH of 7 using sodium hydroxide. The samples are prepared in accordance with the procedures described in Examples 3 and 4 above depending upon whether the copper is water-soluble or water-insoluble. The sources of copper used to prepare the complexes are cupric chloride, copper oxychloride, cuprous oxide and basic copper carbonate. All of the sources of copper formed complexes with the partially neutralized polyacrylic acid.

### Example 12

A copper complex of polyacrylic acid is prepared by adding 1.5% copper (metal equivalent) from cupric hydroxide to an aqueous solution of 12% by weight polymer solids Goodrite K-752 partially neutralized to a pH of 4.8 using sodium hydroxide. The mixture is stirred for approximately 12 hours producing a clear, dark blue solution with no undissolved cupric hydroxide. The solution is then freeze dried using a Labconco lyophilizer at -50° C. under vacuum. The resulting product is a blue, honeycombed, crumbly solid which redissolves easily in water to give a blue-green solution. The dry product contains 8.57% copper and 5% water. An X-ray diffraction spectrum of the dry powder displays no peaks. This indicates that the dry copper complex does not have a crystalline structure.

### Example 13

Copper complexes of polyacrylic acids (obtained from Polysciences) having various molecular weights are prepared by adding excess amounts of copper from cupric hydroxide to a 1% by weight aqueous solution of the partially neutralized polymer at a pH of 5 (neutralized using sodium hydroxide). The liquid portion is separated from the solid cupric hydroxide by filtration and the liquid portion is analyzed for copper. Table 2 below lists the maximum copper complexed by these samples.

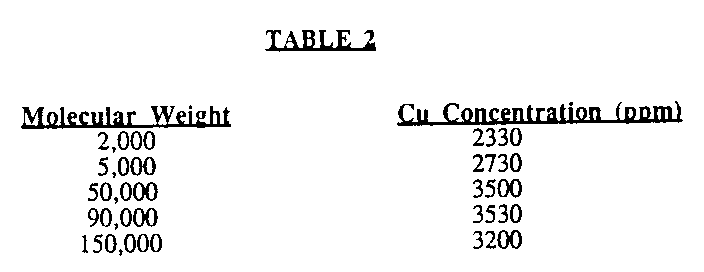

### Example 14

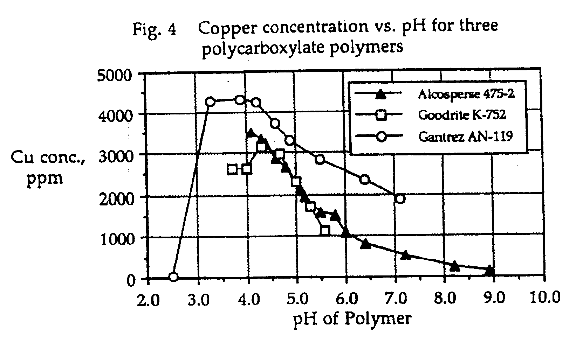

Copper complexes of polycarboxylic acids prepared from three different polymers are prepared. The three polycarboxylic acids are Alcosperse 475-2, a 70/30 copolymer of acrylic acid and maleic acid and having a molecular weight of 20,000, available from Alco Chemical Corp.; Gantrez AN-119, a 50/50 copolymer of methyl vinyl ether and maleic anhydride and having a molecular weight of 20,000, available from GAF Corp.; and Goodrite K-752. The complexes are formed by preparing aqueous solutions containing 1% by weight polymer solids of a polyacrylic acid (Goodrite K-752) which are partially neutralized using sodium hydroxide to pHs ranging from approximately 2.5 to approximately 9. Excess cupric hydroxide is then added to the solutions of polymer. The liquid portion is separated from the undissolved solid cupric hydroxide by filtration and the liquid portion is analyzed for copper. The results of the test are shown in Fig. 4, wherein the concentration of the copper in the complexed product is graphed against the pH of the neutralized polymer solutions. The analysis reveals that all three polymers formed complexes with the copper. These copper complexes are biologically active against *Alternaria solani* and *Xanthomonas campestris* pv. *vescatoria.*

### Example 15

Copper complexes of polyacrylic acids are prepared according to Examples 3 and 4 above depending upon whether the source of copper is water-soluble or water-insoluble. The liquid portions of the copper complexes are then tested for efficacy against *Xanthomonas campestris* pv. *vescatoria*. Separate samples of casitone yeast extract (CYE) culture media are amended with the copper complexes to obtain metallic copper concentrations of 1, 2, 4, 6, 8, 10, 20, 40, 60, 80, and 100 ppm copper, respectively. All comparisons are made to copper sulfate at the same rates since this form of copper is known to be biologically active in agar media. Bacterial cultures produced in CYE media are streaked onto the agar and incubated for 5 days at 27° C. Control is based on the presence or absence of bacterial colonies. All copper complex samples and the copper sulfate samples control bacteria at 6 ppm and above. These tests demonstrate that the copper complex samples made in accordance with the present invention are as active as copper sulfate samples. The results of the test are shown further in Table 3 below.

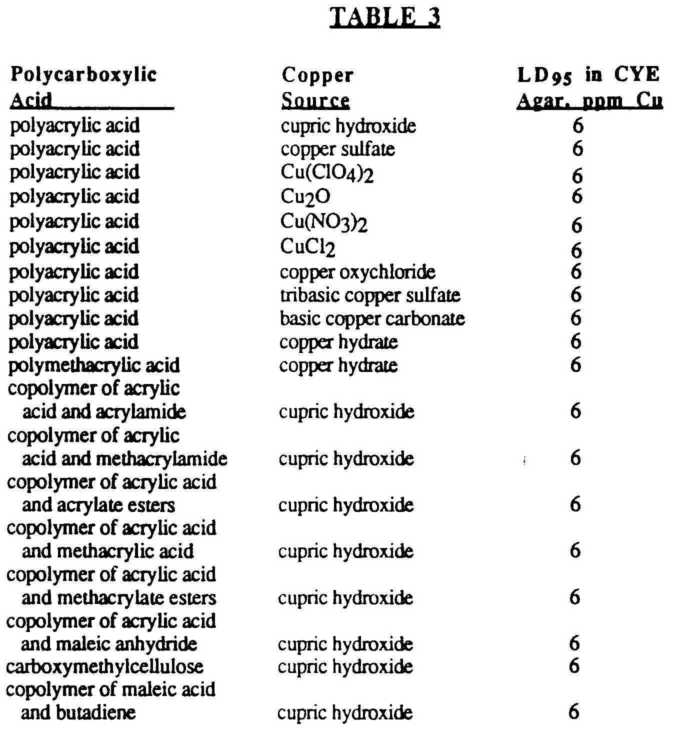

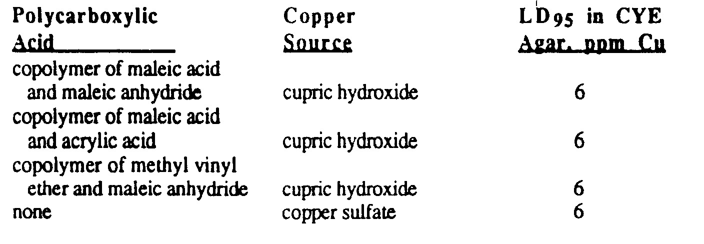

### Example 16

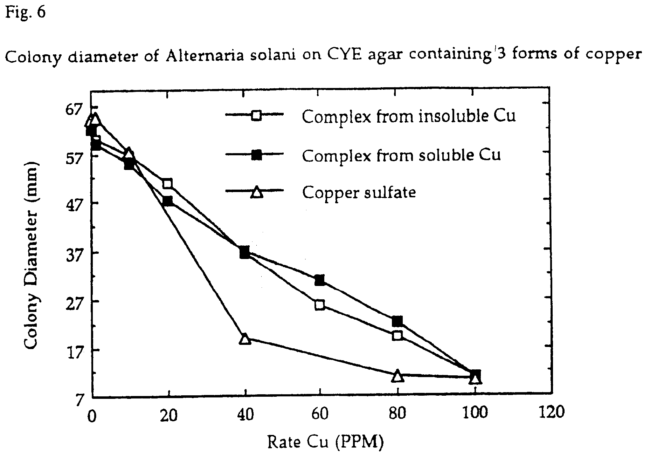

Copper complexes of polyacrylic acids are formed according to the Examples listed in Table 4 below. The liquid portions of the copper complexes are then tested for efficacy against *Alternaria solani*. The copper complexes are tested in CYE culture media inoculated with the target fungi. Separate samples of culture media are amended with the copper complexes to obtain metallic copper concentrations of 1, 10, 20, 40, 60, 80, and 100 ppm copper, respectively. All comparisons are made to copper sulfate at the same rates since this form of copper is known to be biologically active in agar media. Actively growing cultures of *Alternaria solani* are sampled with a 7 mm cork borer around the outer circumference of the colony and placed in the center of culture dishes containing the copper amended media. These samples are incubated at 28° C. for 10 days. Radial culture diameters are measured to determine the effect of the copper on the growth of the fungi. The LD₉₀ of the copper complex samples is 100 ppm copper, whereas, the LD₉₀ for the copper sulfate is 80 ppm copper. These tests demonstrate that the copper complex samples made in accordance with the present invention are substantially as active as the copper sulfate samples. Results of the efficacy tests for various polycarboxylic acids and various sources of copper are reported in Table 4 below and in Fig. 6.

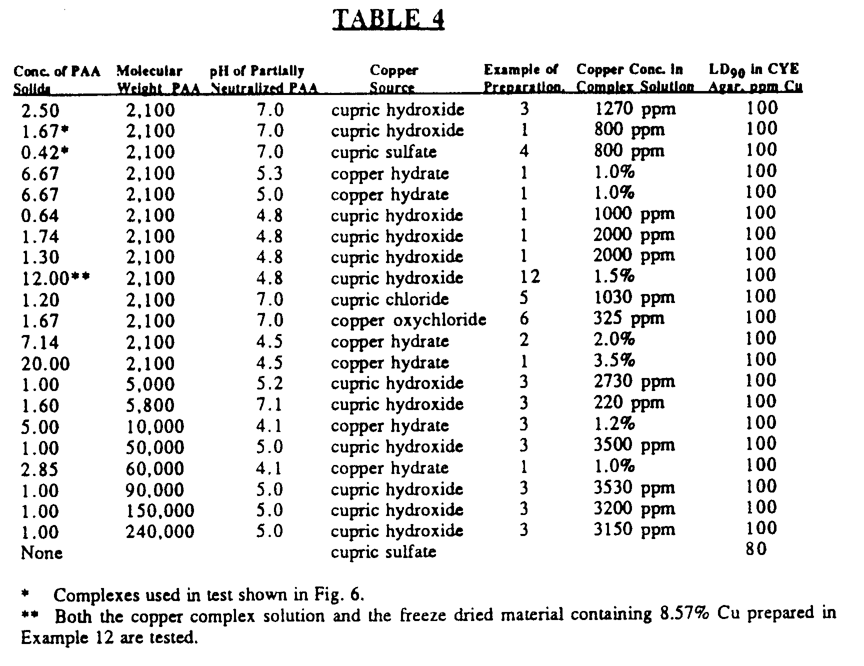

### Example 17

Copper complexes of polyacrylic acids are prepared according to the Examples listed in Table 5 below. The liquid portions of the copper complexes are tested for efficacy against a strain of *Xanthomonas campestris* pv. *vescatoria* that is known to be resistant to conventional copper based bactericides/fungicides. Material prepared in accordance with Example 12 is dissolved in agar for testing. The copper complexes are tested in CYE agar inoculated with the target bacteria. Separate samples of culture media are amended with the copper complexes to obtain media samples containing metallic copper concentrations of 50, 100, 200, and 300 ppm copper, respectively. All comparisons are made to copper sulfate at the same rates since this form of copper is known to be biologically active in agar media. Bacterial cultures produced in CYE media amended with 25 ppm copper are streaked onto the agar and incubated for 5 days at 27° C. Control is based upon the presence or absence of bacterial colonies. Copper complex samples control copper tolerant bacteria at 300 ppm and copper sulfate controls bacteria at 100 ppm. Results of the efficacy tests are reported further in Table 5.

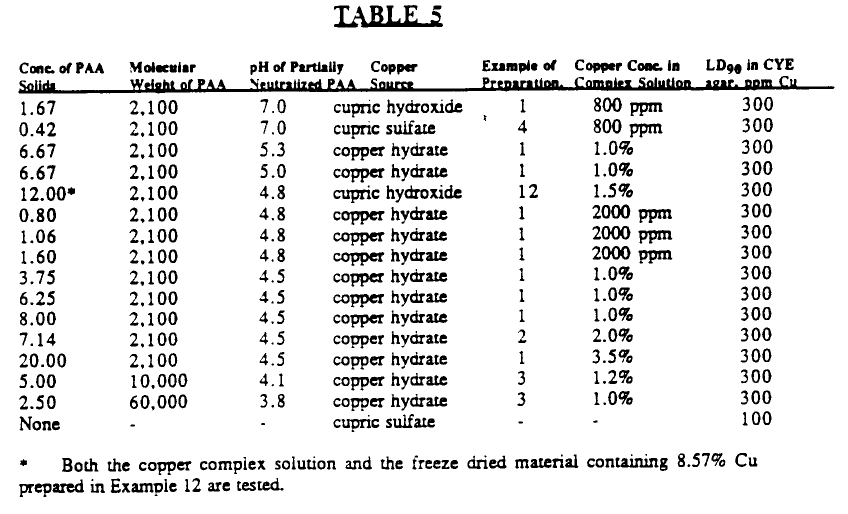

### Example 18

The copper complex solution prepared according to Example 2 is applied to wheat seed at 0.15, 0.3 and 0.6 g Cu/kg seed (7, 14 and 28 grams Cu/cwt seed) by spraying the seed using a laboratory seed treater. The treated seed is air-dried in trays prior to planting. Fifty seeds are sown in soil in flats to evaluate germination and growth after emergence. All treatments are compared to a conventional copper-based bactericide/fungicide (Kocide (RTM) Seed Dressing) at 0.6 g Cu/kg (28 grams Cu/cwt). Germination and growth are similar for all treatments (see Table 6 below). No phytotoxicity of emerging seedlings is noted.

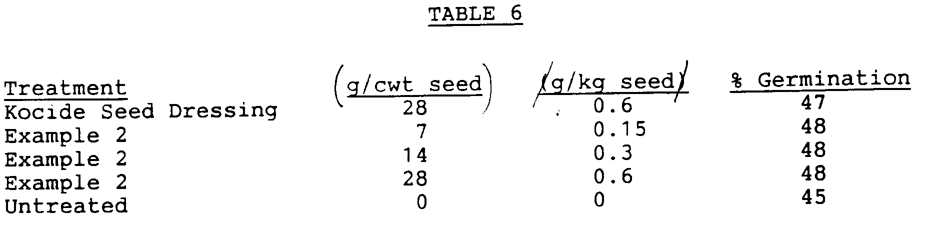

### Example 19

The copper complex solution prepared according to Example 2 is applied to oranges at 100, 500, and 1000 ppm by dipping the fruit into the respective solutions and allowing the solution to dry on fruit surface. Before the fruit are dipped, they are inoculated with *Alternaria citri*, *Phytophthora cirrophthora*, *Penicillium digatatum* and *Collecotrichum gloeosporioides*. The fruit are stored at 5° C and 80% relative humidity for 14 days after which the number of diseased fruit are counted. At the end of the test period, 100% of untreated fruit are diseased and 35%, 10%, and 8% of fruit treated with 100, 500 and 1000 ppm Cu are diseased respectively. No scaring or discoloration of the fruit is observed.

### Example 20

The copper complex solution prepared according to Example 2 is applied to geranium plants at 1000 ppm Cu, five times at weekly intervals. At the end of the test period, residues are evaluated and compared to conventional copper-based bactericides/fungicides applied at the same rate of copper. Compared to the conventional treatments, residues are not clearly visible with the naked eye. After residues are evaluated, plants are subjected to overhead irrigation. After the plants are dry, residues are again evaluated. Conventional fungicide treatment leaves a highly visible residue while plants treated with the copper complex have almost no trace of residue remaining. No phytotoxicity of any kind is observed.

### Example 21

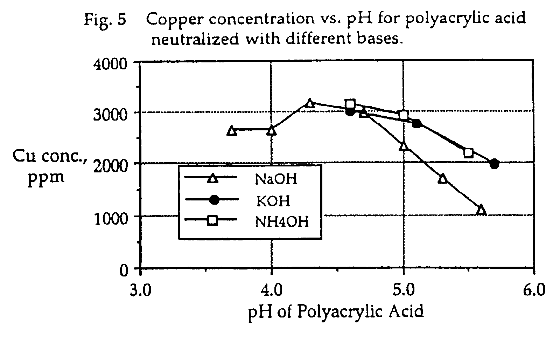

A copper complex solution is prepared according to Example 3 except that the polyacrylic acid is neutralized with three different basic compounds to pHs in the range of 3 to 6. The three basic compounds are sodium hydroxide, potassium hydroxide and ammonium hydroxide. The samples contain 1% by weight polymer solids Goodrite K-752. The different samples are analyzed for copper. The results of the test are shown in Fig. 5 wherein the concentration of copper is graphed against the pH of the neutralized polyacrylic acid for the three different neutralizing compounds.

## Claims

1. A method of controlling bacterial/fungal diseases in plants comprising the step of applying to a plant substrate to be treated a bactericide fungicide comprising an aqueous solution of a complex of copper and a partially neutralized, water-soluble polycarboxylic acid having a molecular weight of between 1,000 and 300,000, characterised in that:
- the partially neutralized polycarboxylic acid has a pH in aqueous solution of between 3 and 9 when the polycarboxylic acid is in solution before complexation with said copper;
- said composition is substantially free of ammonia; and
- said composition is substantially nonphytotoxic.

2. A method according to Claim 1, characterised in that the bactericide/fungicide is applied to crops, after said crops have been harvested.

3. A method according to Claim 1, characterised in that the bactericide/fungicide is applied to seed.

4. A method according to Claim 1, characterised in that the substrate is the foliage of ornamental plants.

5. The method of any previous claim wherein said polycarboxylic acid is selected from the group consisting of polyacrylic acid, polymethacrylic acid, copolymers of acrylic acid and acrylamide, copolymers of acrylic acid and methacrylamide, copolymers of acrylic acid and acrylate esters, copolymers of acrylic acid and methacrylic acid, copolymers of acrylic acid and methacrylate esters, copolymers of acrylic acid and maleic anhydride, carboxymethylcellulose, copolymers of maleic acid and butadiene, polymers of maleic acid and maleic anhydride, copolymers of maleic acid and acrylic acid, and copolymers of methyl vinyl ether and maleic anhydride.

6. The method of any previous claim wherein said molecular weight is between 2,000 and 50,000.

7. The method of any previous claim wherein said pH is between 3.5 and 5.0.

8. The method of any previous claim wherein said copper is derived from a compound selected from Cu(OH)₂, CuSO₄, Cu(Cl0₄)₂, Cu₂0, Cu(NO₃)₂, CuCl₂, copper oxychloride, tribasic copper sulfate, and basic copper carbonate.

9. The method of any previous claim wherein said copper is derived from a compound selected from Cu(OH)₂, Cu₂0, tribasic copper sulfate, basic copper carbonate and copper oxychloride.

10. The method of any previous claim wherein said copper is present in an amount between 0.1% by weight and 5% by weight (copper metal equivalent).

11. The method of Claim 10 wherein said copper is present in an amount between 0.1% by weight and 3.2% by weight (copper metal equivalent).

12. The method of any previous claim wherein said polycarboxylic acid is in an amount sufficient to prevent said copper from precipitating.

13. The method of any previous claim wherein said polycarboxylic acid is in an amount between 0.2% by weight and 80% by weight.

14. The method of Claim 13 wherein said polycarboxylic acid is in an amount between 0.75% and 20% by weight.

15. The method of any previous claim wherein said bacterial diseases are copper tolerant.

16. A method according to any previous claim wherein the composition additionally comprises an effective amount of a sticker compound which provides sufficient tenacity to said copper complex to reduce removal from plant surfaces by rain.

17. A method according to Claim 16, wherein said sticker compound is selected from polyvinylpyrrolidone, polyethoxyethylene, polyvinylalcohol and polyacrylamide.

## Patentansprüche

1. Verfahren zur Bekämpfung von bakteriellen/Pilzkrankheiten in Pflanzen, umfassend den Schritt Applizieren eines Bakterizids/Fungizids, umfassend eine wässerige Lösung eines Komplexes von Kupfer und eine teilweise neutralisierte, wasserlösliche Polycarbonsäure mit einem Molekulargewicht zwischen 1 000 und 300 000, auf ein zu behandelndes Pflanzensubstrat, dadurch gekennzeichnet, daß:
- die teilweise neutralisierte Polycarbonsäure einen pH-Wert in wässeriger Lösung zwischen 3 und 9 aufweist, wenn die Polycarbonsäure vor der Komplexierung mit dem Kupfer in Lösung vorliegt;
- die Zusammensetzung im wesentlichen frei von Ammoniak ist; und
- die Zusammensetzung im wesentlichen nichtphytotoxisch ist.

2. Verfahren nach Anspruch 1, dadurch gekennzeichnet, daß, das Bakterizid/Fungizid auf Kulturen appliziert wird, nachdem die Kulturen geerntet wurden.

3. Verfahren nach Anspruch 1, dadurch gekennzeichnet, daß das Bakterizid/Fungizid auf Saatgut appliziert wird.

4. Verfahren nach Anspruch 1, dadurch gekennzeichnet, daß das Substrat das Blattwerk von Zierpflanzen ist.

5. Verfahren nach einem vorangehenden Anspruch, wobei die Polycarbonsäure ausgewählt ist aus der Gruppe, bestehend aus Polyacrylsäure, Polymethacrylsäure, Copolymeren von Acrylsäure und Acrylamid, Copolymeren von Acrylsäure und Methacrylamid, Copolymeren von Acrylsäure und Acrylatestern, Copolymeren von Acrylsäure und Methacrylsäure, Copolymeren von Acrylsäure und Methacrylatestern, Copolymeren von Acrylsäure und Maleinsäureanhydrid, Carboxymethylcellulose, Copolymeren von Maleinsäure und Butadien, Polymeren von Maieinsäure und Maleinsäureanhydrid, Copolymeren von Maleinsäure und Acrylsäure und Copolymeren von Methylvinylether und Maleinsäureanhydrid.

6. Verfahren nach einem vorangehenden Anspruch, wobei das Molekulargewicht zwischen 2 000 und 50 000 liegt.

7. Verfahren nach einem vorangehenden Anspruch, wobei der pH-Wert zwischen 3,5 und 5,0 liegt.

8. Verfahren nach einem vorangehenden Anspruch, wobei das Kupfer abgeleitet ist von einer Verbindung, ausgewählt aus Cu(OH)₂, CuSO₄, Cu(ClO₄)₂, Cu₂O, Cu(NO₃)₂, CuCl₂, Kupferoxychlorid, dreibasischem Kupfersulfat und basischem Kupfercarbonat.

9. Verfahren nach einem vorangehenden Anspruch, wobei das Kupfer von einer Verbindung, ausgewählt aus Cu(OH)₂, Cu₂O, dreibasischem Kupfersulfat, basischem Kupfercarbonat und Kupferoxychlorid abgeleitet ist.

10. Verfahren nach einem vorangehenden Anspruch, wobei das Kupfer in einer Menge zwischen 0,1 Gewichtsprozent und 5 Gewichtsprozent (Kupfer-Metall-Äquivalent) vorliegt.

11. Verfahren nach Anspruch 10, wobei das Kupfer in einer Menge zwischen 0,1 Gewichtsprozent und 3,2 Gewichtsprozent (Kupfer-Metall-Äquivalent) vorliegt.

12. Verfahren nach einem vorangehenden Anspruch, wobei die Polycarbonsäure in einer Menge vorliegt, die ausreichend ist, um das Ausfällen des Kupfers zu verhindern.

13. Verfahren nach einem vorangehenden Anspruch, wobei die Polycarbonsäure in einer Menge zwischen 0,2 Gewichtsprozent und 80 Gewichtsprozent vorliegt.

14. Verfahren nach Anspruch 13, wobei die Polycarbonsäure in einer Menge zwischen 0,75% und 20 Gewichtsprozent vorliegt.

15. Verfahren nach einem vorangehenden Anspruch, wobei die bakteriellen Krankheiten Kupfer-tolerant sind.

16. Verfahren nach einem vorangehenden Anspruch, wobei die Zusammensetzung zusätzlich eine wirksame Menge einer Haftverbindung umfaßt, die dem Kupferkomplex ausreichend Haftung verleiht, um die Entfernung von den Pflanzenoberflächen durch Regen zu vermindern.

17. Verfahren nach Anspruch 16, wobei die Haftverbindung ausgewählt ist aus Polyvinylpyrrolidon, Polyethoxyethylen, Polyvinylalkohol und Polyacrylamid.

## Revendications

1. Procédé de lutte contre les maladies bactériennes/fongiques des plantes, comprenant l'étape consistant à appliquer sur un substrat végétal à traiter un bactéricide/fongicide comprenant une solution aqueuse d'un complexe de cuivre et d'un acide polycarboxylique hydrosoluble partiellement neutralisé ayant un poids moléculaire compris entre 1000 et 300000, caractérisé en ce que :
- l'acide polycarboxylique partiellement neutralisé a un pH en solution aqueuse compris entre 3 et 9 quand l'acide polycarboxylique est en solution avant la complexation avec ledit cuivre;
- ladite composition est sensiblement dépourvue d'ammoniaque; et
- ladite composition est sensiblement non phytotoxique.

2. Procédé selon la revendication 1, caractérisé en ce que le bactéricide/fongicide est appliqué sur des cultures, après la récolte desdites cultures.

3. Procédé selon la revendication 1, caractérisé en ce que le bactéricide/fongicide est appliqué sur les semences.

4. Procédé selon la revendication 1, caractérisé en ce que le substrat est le feuillage de plantes d'ornement.

5. Procédé selon l'une quelconque des revendications précédentes, dans lequel ledit acide polycarboxylique est choisi dans le groupe constitué de l'acide polyacrylique, de l'acide polyméthacrylique, des copolymères d'acide acrylique et d'acrylamide, des copolymères d'acide acrylique et de méthacrylamide, des copolymères d'acide acrylique et d'esters acryliques, des copolymères d'acide acrylique et d'acide méthacrylique, des copolymères d'acide acrylique et d'esters méthacryliques, des copolymères d'acide acrylique et d'anhydride maléique, de la carboxyméthylcellulose, des copolymères d'acide maléique et de butadiène, des polymères d'acide maléique et d'anhydride maléique, des copolymères d'acide maléique et d'acide acrylique, et des copolymères de méthylvinyl éther méthylvinylique et d'anhydride maléique.

6. Procédé selon l'une quelconque des revendications précédentes dans lequel ledit poids moléculaire est compris entre 2000 et 50000.

7. Procédé selon l'une quelconque des revendications précédentes dans lequel ledit pH est compris entre 3,5 et 5,0.

8. Procédé selon l'une quelconque des revendications précédentes dans lequel ledit cuivre provient d'un composé choisi parmi Cu(OH)₂, CuSO₄, Cu(ClO₄)₂, Cu₂O, Cu(NO₃)₂, CuCl₂, l'oxychlorure de cuivre, le sulfate de cuivre tribasique, et le carbonate basique de cuivre.

9. Procédé selon l'une quelconque des revendications précédentes dans lequel ledit cuivre provient d'un composé choisi parmi Cu(OH)₂, Cu₂O, le sulfate de cuivre tribasique, le carbonate basique de cuivre et l'oxychlorure de cuivre.

10. Procédé selon l'une quelconque des revendications précédentes dans lequel ledit cuivre est présent en une quantité comprise entre 0,1% en poids et 5% en poids (équivalent de cuivre métal).

11. Procédé selon la revendication 10 dans lequel ledit cuivre est présent en une quantité comprise entre 0,1% en poids et 3,2% en poids (équivalent de cuivre métal).

12. Procédé selon l'une quelconque des revendications précédentes dans lequel ledit acide polycarboxylique est présent en une quantité suffisante pour empêcher ledit cuivre de précipiter.

13. Procédé selon l'une quelconque des revendications précédentes dans lequel ledit acide polycarboxylique est présent en une quantité comprise entre 0_{,}2% en poids et 80% en poids.

14. Procédé selon la revendication 13 dans lequel ledit acide polycarboxylique est présent en une quantité comprise entre 0,75% et 20% en poids.

15. Procédé selon l'une quelconque des revendications précédentes dans lequel lesdites maladies bactériennes tolèrent le cuivre.

16. Procédé selon l'une quelconque des revendications précédentes dans lequel la composition comprend en outre une quantité efficace d'un composé collant qui donne une ténacité suffisante audit complexe de cuivre pour diminuer l'élimination de la surface des plantes par la pluie.

17. Procédé selon la revendication 16, dans lequel ledit composé collant est choisi parmi la polyvinylpyrrolidone, le polyéthoxyéthylène, l'alcool polyvinylique et le polyacrylamide.
